# EUROPEAN PATENT SPECIFICATION

(11) **EP 3 698 130 B1**
(45) Date of publication and mention of the grant of the patent: **13.10.2021**
(21) Application number: 18793201.7
(22) Date of filing: 19.10.2018
(51) Int. Cl.: G01N 27/447

(54) **MICROCHIP FOR FREE FLOW ELECTROPHORESIS**
MIKROCHIP FÜR FREIFLUSSELEKTROPHORESE
MICROPUCE POUR ÉLECTROPHORÈSE À FLUX LIBRE

(30) Priority: 19.10.2017 EP 17197296
(43) Date of publication of application: 26.08.2020
(73) Proprietor: Université de Liège, 4000 Liège (BE)
(72) Inventor: DELMARCELLE, Michaël, 1457 Walhain (BE); STEFANIC, Patrick, 4000 Liège (BE); JORIS, Bernard, 4141 Louveigné (BE)
(74) Representative: V.O.
(86) International application number: PCT/EP2018/078769
(87) International publication number: WO 2019/077134

(56) References cited:
- EP-A1- 0 497 077
- WO-A1-2008/025806
- WO-A1-2017/096243
- WO-A2-02/50524
- US-A- 3 829 370
- US-A1- 2012 228 141

## Description

### FIELD OF INVENTION

This invention relates to the field of free flow electrophoresis (FFE) and to analytical and (micro-)preparative methods and devices for the separation of chemical or biological entities.

### BACKGROUND OF THE INVENTION

Free-Flow electrophoresis (FFE) is a free flow separation method: indeed, it works without any stationary phase. FFE has a longstanding position among analytical and (micro-)preparative methods in biochemistry and chemistry for the separation of, e.g., organic and inorganic compounds, peptides, macromolecules, organelles, cells and other particles or biological or chemical entities. It can be used in different modes such as zone electrophoresis, isoelectro-focusing or isotachophoresis.

Entities to be separated are introduced into a separation chamber in between two plates where an electric field is applied in a transverse manner, usually perpendicular to the flow. According to their charge to size ratio and media viscosity, the entities are deflected. Consequently, entities with different electrophoretic mobilities can be separated from complex mixtures.

Although FFE is regarded as a powerful method, the available devices are uneasy to operate due to tricky settings and long processing times. Moreover, those systems show a lot of dispersion effects that limit their performances, like heating (due to Joule Effect) and diffusion (due to long residence times).

At micrometric levels, FFE is named micro-FFE (µFFE). Micro-FFE is merely dedicated to analytical purposes, due to low productivity. Until now, µFFE is not considered as being a preparative tool.

Another problem is that µFFE chips are mostly made with (thermo-)plastics, e.g. such as cyclic cycloolefin (COC) or polycarbonate (PC) which are hydrophobic and not biocompatible. Biomolecules and biological particles are hardly processed onto them and tend to stick irreversibly to the inner surfaces. Also, (thermo-)plastics degrade overtime.

Song et al. in Analytical Chemistry (2010, 92:2317-2325) disclose a microchip made mainly of PDMS which cannot stand long term processing. Furthermore, it comprises a Teflon membrane which delimits the separation chamber from the highly conductive solutions. Eventually, the PDMS part need to be aligned to the Teflon pattern printed on the glass cover, which makes it complicated to manufacture.

WO 2008/025806 A1 discloses an apparatus for separating particles comprising an electrophoresis chamber having a top plate, a bottom plate and electrodes generally parallel to one another with a separation space disposed therebetween. The top and bottom plates are separated by spacers, acting as gaskets or seals, that delimit the separation space within the electrophoresis chamber. The electrodes are solid electrodes composed of a metal which may be washed by a buffer solution, referred to as cathode media and anode media, so as to remove electrolysis products that are created during the process. Such an apparatus does not enable a quick design of varieties of fluidic circuits and presents the problem that the electrodes create electrolysis in the electrophoresis chamber.

Therefore, many issues are still pending in this technique, and most of them are linked to the micromanufacturing process, costly and uneasy to serial, and the fact that the µFFE chips do not have a long service life.

This invention aims at providing a cost-effective µFFE chip, easy to manufacture, to operate and to care for; especially the chip of the invention can be easily and rapidly dismantled and reassembled. Maintenance and cleaning are also streamlined and in case a part is broken, it could be quickly fixed-up by replacement.

This invention aims at providing a robust µFFE chip, i.e. capable to sustain long-term steady operations.

An advantage of the chip of the invention is its versatility, i.e. its ability to process and purify all kind of biological and chemical entities e.g. ions, small chemicals, proteins, microvesicles, viral particles, cells.

Moreover, the invention enables a quick designing of varieties of fluidic circuits to be tested and their subsequent easy integration in the chip in a timely manner.

The µFFE chip of this invention can be used in any situation where an electric field is applied to extract, separate or purify charged as well as neutral particles from an injected mixture with at least two components. Thus, the µFFE chip of the invention is designed to suit to a wide spectrum of applications, and may be used for (micro-)preparative as well as for all analytical purposes related to µFFE and their variations, e.g. isoelectrofocusing or isotachophoresis.

Also, this invention addresses the productivity issue by multi-processing simultaneously the sample through a so-called numbering-up approach.

### BRIEF DESCRIPTION

According to one aspect, the invention relates to a micro-free flow electrophoresis chip for analyzing or separating a sample including a pile according to claim 1.

The chip comprises of at least a first plate and a second plate; a sheet uniformly disposed between the first and second plates, a part of said sheet being hollowed out for designing a fluidic circuit comprising at least two inlets, at least one outlet, and at least one separation chamber, the at least one separation chamber having walls defined by the height of the sheet and being confined by the plates; clamping means; in-between the sheet and the second plate, n stacks composed of a plate and a sheet, n being zero or a positive integer.

For example, the micro-free flow electrophoresis chip includes a pile comprising or consisting of:
- at least a first plate and a second plate,
- a sheet uniformly disposed between the first and second plates, a part of said sheet being hollowed out for designing a fluidic circuit, said fluidic circuit comprising at least two inlets, at least one outlet, and at least one separation chamber, the at least one separation chamber having walls defined by the height of the sheet and being confined by the plates,
- in-between the sheet and the second plate, n stacks composed of a plate and a sheet, n being zero or a positive integer,
- clamping means for confining the sheet(s) between the plates,
each sheet comprising at least two inlets for entry and at least one outlet for exit of:
- a first fluid electrode intended to flow along a first wall of the separation chamber,
- a second fluid electrode intended to flow along a second wall of the separation chamber opposite to the first wall,
- a sample intended to flow between the first and second fluid electrodes, said first and second fluid electrodes being configured to apply an electric field to the separation chamber.

According to the invention, the fluidic circuit comprises at least three inlets, i.e. at least one inlet arranged for entry of the first fluid electrode, one inlet arranged for entry of the second fluid electrode and one inlet arranged for entry of the sample.

In one embodiment, the first fluid electrode flows from an inlet to an outlet along a first wall of the separation chamber. In one embodiment, the first fluid electrode flows in direct contact with a first wall of the separation chamber. In another embodiment, the first fluid electrode flows from a source of highly conductive solutions, preferably from a container storing a highly conductive solution, to the inlet and continues flowing from the inlet to the outlet along a first wall of the separation chamber. In one embodiment, the first fluid electrode is then recycled.

For example, there can be provided a Micro-Free Flow Electrophoresis chip for analyzing or separating a sample including a pile comprising:
- at least a first plate and a second plate,
- a sheet uniformly disposed between the first and second plates, a part of said sheet being hollowed out for designing a fluidic circuit, said fluidic circuit comprising at least two inlets, at least one outlet, and a separation zone comprising at least one separation chamber confined by the plates,
- clamping means,
- in-between the sheet and the second plate, n stacks composed of a plate and a sheet, n being zero or a positive integer,
each sheet comprising at least two inlets for entry and at least one outlet for exit of:
- a first fluid electrode intended to flow, in each separation chamber, along a first side of the separation chamber,
- a second fluid electrode intended to flow, in each separation chamber, along a second side of the separation chamber opposite to the first side,
- a sample intended to flow, in each separation chamber, between the first and second fluid electrodes,
said first and second flowing electrodes in each separation chamber being configured to apply an electric field to the separation chamber.

According to the invention, the fluidic circuit comprises at least three inlets, i.e. at least one inlet arranged for entry of the first fluid electrode, one inlet arranged for entry of the second fluid electrode and one inlet arranged for entry of the sample.

According to the invention, the first and the second fluid electrodes are flowing electrodes. The fluid electrodes are highly conductive solutions. The fluid electrodes may include ionic entities such as saline solutions, for example. In one embodiment, the fluid electrodes may include chloride or fluoride salts. In another embodiment, the fluid electrodes may include HEPES (4-(2-hydroxyethyl)-1-piperazineethanesulfonic acid), citrate, MES (2-(*N*-morpholino)ethanesulfonic acid), or acetate. In one embodiment, the fluid electrodes may further include HPMC (Hydroxypropyl methyl cellulose), Tween 20 (Polyoxyethylene (20) sorbitan monolaurate), methanol, ethanol and/or KCl. In one embodiment, Fluorescein sodium salt., Rhodamine B or Rhodamine 110 may be used as visual marker for monitoring the flowing electrodes fluidics. In one embodiment, the fluid electrodes comprise HEPES 10 mM, pH7.5, HPMC 0.2% (w/v), Tween 20 0.1% (w/v), Methanol 40% (v/v), 0.5 M KCl.

In one embodiment, each one of the first and second fluid electrodes is configured to flow from an inlet to an outlet along a respective first or second side of the separation chamber. In one embodiment, each one of the first and second fluid electrodes is configured to flow from a source of highly conductive solutions, preferably from a container storing a highly conductive solution, to the inlet and to continue flowing from the inlet to the outlet along a respective first or second side of the separation chamber. In one embodiment, each fluid electrode is then recycled.

For each sheet, the separation zone may comprise one or several separation chambers.

According to one embodiment, at least one sheet comprises two or more adjacent separation chambers, each sheet comprising at least two inlets for entry and at least one outlet for exit of:
- a first fluid electrode intended to flow in each separation chamber along a first side of the separation chamber,
- a second fluid electrode intended to flow in each separation chamber along a second side of the separation chamber opposite to the first side,
- a sample intended to flow in each separation chamber between the first and second fluid electrodes,
said first and second flowing electrodes in each separation chamber being configured to apply an electric field to the separation chamber.

The presence of two or more adjacent separation chambers makes it possible to increase the quantity of sample treated in a given period of time.

The invention makes it possible to have both adjacent separation chambers and stacked separation chambers.

The volume of treated sample can be high while having a reduced volume of each separation chamber and while keeping a good control of the fluid behavior.

According to the invention, the separation zone comprises walls defined by the height of the sheet.

In one embodiment, the separation zone comprises two outer walls defining two outer sides of the separation zone.

In one embodiment, the separation zone comprises a number of walls adapted so as to define the first and second sides of each separation chamber of the separation zone.

In one embodiment, two adjacent separation chambers are separated structurally by a wall of the sheet designed during the hollowing step.

In another embodiment, two adjacent separation chambers are not separated structurally by a wall but delimited by at least one of the first and second fluid electrodes during their flowing in the fluidic circuit.

In one embodiment, the fluidic circuit, comprising at least two inlets, at least one outlet and the separation zone, is arranged so that when the first and second fluid electrodes flow from the inlets to the outlet(s) through the separation zone, each pair of two adjacent and preferably parallel first and second fluid electrodes, comprising an anode and a cathode, define a separation chamber disposed therebetween.

For instance, with three parallel fluid electrodes flowing through the separation zone of the fluidic circuit, where said electrodes may for example comprise two anodes and one shared cathode, or inversely two cathodes and one shared anode, two adjacent separation chambers can be formed.

In one embodiment, for at least one sheet, the separation zone comprises at least two adjacent separation chambers, the fluidic circuit being configured in such a way that the two adjacent separation chambers are delimited by at least one of the first and second fluid electrodes during their flowing in the fluidic circuit.

According to the invention, each one of the first and second fluid electrodes is in contact with means for generating an electric field. In one embodiment, the means for generating the electric field within the flowing fluid electrodes are located upstream and/or downstream the pile.

In one embodiment, the means for generating an electric field is a solid electrode. In one embodiment, the solid electrode is a platinum electrode. In one embodiment, the highly conductive solution is stored in a container, where it is in contact with a solid electrode. In one embodiment, the highly conductive solutions are pumped out from the container to the fluidic circuit.

In one embodiment, the first fluid electrode flows from an inlet to an outlet along a first wall of the separation chamber. In one embodiment, the first fluid electrode flows in direct contact with a first wall of the separation chamber. In another embodiment, the first fluid electrode flows from a source of highly conductive solutions, preferably from a container storing a highly conductive solution, to the inlet and continues flowing from the inlet to the outlet along a first wall of the separation chamber. In one embodiment, the first fluid electrode is then recycled.

According to the invention, the first fluid electrode is in contact with a means for generating an electric field. In one embodiment, the means for generating an electric field is a solid electrode. In one embodiment, the solid electrode is a platinum electrode.

In one embodiment, the second fluid electrode flows from an inlet to an outlet along a second side of the separation chamber, opposite to the first side. In one embodiment, the second fluid electrode flows from a source of highly conductive solutions, preferably from a container storing a highly conductive solution, to the inlet and continues flowing from the inlet to the outlet along the second side of the separation chamber. In one embodiment, the second fluid electrode is then recycled.

According to the invention, the second fluid electrode is in contact with a means for generating an electric field. In one embodiment, the means for generating an electric field is a solid electrode. In one embodiment, the solid electrode is a platinum electrode.

In one embodiment, the highly conductive solution used for both first and second fluid electrode is stored in a container, where it is in contact with a solid electrode. In one embodiment, the highly conductive solution used for the first fluid electrode is stored in a first container. In one embodiment, the highly conductive solution used for the second fluid electrode is stored in a second container. In one embodiment, solid electrodes are connected to a power supply so that a voltage can be applied and generate an electric field in the separation chamber. One electrode is a cathode and one electrode is an anode.

In one embodiment, a counter-pressure or flow resistance can be added at some or all of the outlets in order to steer the entity of interest to one particular outlet, e.g. with flow adjustable restrictors connected at the outlets. Such steering can also take place upstream the chamber by applying asymmetric flows entering the chamber. This may be implemented with an asymmetric design of the sheet.

In one embodiment, the chip further comprises a carrier intended to flow between the flowing electrodes and the sample in each separation chamber. The carrier is intended to sheath and focus the sample flow. In one embodiment, the fluid electrodes are adjacent on one side to the carrier, also referred to as low conductive solution. In one embodiment, the carrier may include HEPES, citrate, MES, or acetate. In one embodiment, the carrier may further include HPMC, TWEEN, methanol, ethanol and/or KCl. In one embodiment, the carrier includes HEPES 10mM, pH7.5, HPMC 0.2% (w/v), Tween 20 0.1% (w/v). HPMC may be used to limit or even suppress electrodynamic dispersion due to electro-osmotic flow. It may serve also as a dynamic coating of the inner surfaces of the chamber and channels to prevent potential non-specific entities adsorption. Tween detergent favors solubilization of the injected material and can also limit the occurrence of bubbles. In one embodiment, all the solutions are 0.2 µm filtered and degassed before use.

Carrier may be the same or different at both sides of the sample. In one embodiment, carrier is pumped with positive pressure or with negative pressure from at least one container into the separation chamber.

Conductivity of the flowing electrodes is usually within the range 0.3 to 250 mS/cm and need to be at least 3-fold higher than the conductivity of carrier solutions. The conductivity of the sample needs to be the same or close to the one of low conductive solution.

In one embodiment, the clamping means comprise glue and/or screws and/or springs and/or any type of clamps. In one embodiment, the clamping means include screws, rings and springs.

In one embodiment, the clamping means comprise two clamping plates or protective plates, including an upper clamping plate and a bottom clamping plate. In one embodiment, the clamping means may include sticking the upper protective plate and the bottom protective plate one to another, for example with any suitable glue such as an epoxy based glue or with any other chemical based bonding, such as for example plasma anode bonding.

In one embodiment, the chip of the invention further includes at least one gasket, such as a rubber sheet for example, placed in-between a clamping plate and a stack.

In one embodiment, the clamping plates are in metal, such as aluminum; in polymer, especially resin; or in a suitable insulating material.

In one embodiment, the chip further comprises connectors and/or tubings for bringing in and out the fluidic circuit, the flowing electrodes, the sample, and optionally the carrier. In one embodiment, the connectors are Dolomite linear 7-way connectors or equivalent. In one embodiment, the micro-free flow electrophoresis chip of the invention comprises connectors between inlets and tubings bringing in the fluidic circuit the flowing electrodes, the sample and optionally the carrier. In one embodiment, the connectors fitting the tubings to the top glass plate are decoupled from the two plates. In one embodiment, tubings are in direct contact with holes in the top plate. In another embodiment, tubings are set laterally.

In one embodiment, the tubings connecting the container with the high conductive solution to the device have a bigger cross section to decrease ohmic resistance and deliver a higher electric field within the chamber.

In one embodiment, the tightness was achieved by screwing: the upper clamping plate is pierced with four screws while the bottom clamping plate is holed so both can match. In one embodiment, nuts equipped with metallic rings can be screwed so the two clamping plates press the gasket joint, the glass plates and the sheet ensuring tightness of the separation chamber and of the different layers.

In one embodiment, these additional connectors (Dolomite linear 7-way connectors) are set at the inlets and outlets of the chamber. Such connectors may be used to increase the number of outlet ports. In one embodiment, all the tubings go through fastener into the Dolomite part. In one embodiment, the tubings are in direct contact with holes in the top glass plate. In one embodiment, inside the Dolomite connecting part there is a gasket joint with small holes wherein tubings fit/settle.

In one embodiment, both Dolomite connectors are fitted over the top glass plate thanks to a specially designed part that presses them and avoid leakage at the interface. In one embodiment, this specific part has two screws, with two rings and two springs. In one embodiment, by screwing the springs push onto the part which in turn presses the gasket joint of the Dolomite part. In one embodiment, there is one such pressing part per Dolomite connector.

In one embodiment, the extremity of every 1/32" tubing connected to the fluidic circuit is milled to match with laser machined holes in the top glass plate.

Although not presented in details, tubings can as well be stuck with a specific epoxy based glue and the use of Dolomite connectors is no more necessary.

In one embodiment, during the assembling phase, two narrow shafts may be used as guides to lay out all the different layers so holes match well. In one embodiment, this may avoid any flow encountering unwanted high fluidic resistance. In one embodiment, this may simplify the numbering-up of separation chambers by multi-stacking.

In one embodiment, inlets and outlets related to the flowing electrodes are larger than 1/32" o.d tubings in order to limit the ohmic resistance. In one embodiment, these connector parts are PEEK with male 1/16" o.d (GE Healthcare) screwed to the top plates or equivalent. In one embodiment, the part is female Metric 6 upstream and can fit larger tubings from the container with highly conductive solution.

In one embodiment, the chip further comprises means for cooling the chip, especially means for circulating a coolant fluid in, over, under or at the sidewall of a plate, a sheet or a stack, wherein the means may be a cooling plate integrated in the stack and/or may be cooling means integrated within at least one clamping plate.

In one embodiment, n, the number of stacks composed of a plate and a sheet, is 0 or ranges from 1 to 1000, preferably 2 to 100.

In one embodiment, the fluidic circuit is free of any membranes.

In one embodiment, the sheet has a micrometric height, which can range from 1 to 600 micrometers, preferably 10 to 350 micrometers, more preferably 50 to 200 micrometers depending on the flow to treat.

The sheet can be made of any suitable material according to compatibility and the kind of entities to be analyzed, extracted or purified with the microchip of the invention.

For example, when apolar or hydrophobic entities have to be analyzed, extracted or purified, the sheet may preferably be made of a hydrophobic material.

In one example, when polar or hydrophilic entities, such as for example proteins, microvesicles or cells have to be analyzed, extracted or purified, the sheet may preferably be made of a hydrophilic material.

In one embodiment, the sheet is made of a polymer. In one embodiment, the sheet is made of a polymer selected in the group consisting of organic materials, such as for example polyimide, polyethylene, polyethylene terephthalate, polyamide, epoxy or polycarbonate; or of inorganic materials, such as for example glass, quartz or alumina. An example of suitable polymer is a polyimide film such a Kapton® film.

In one embodiment, the sheet can also be textured or engraved, e.g. by laser so to add a porous physical separation in between the flowing electrodes (highly conductive solution) and the carrier (low conductive solution). Another possibility is to build inner porous walls from different material, e.g. polyacrylamide membranes, amorphous silicon or textured glass. The advantage of building inner walls is that the set-up flow of the highly conductive solutions no longer affects the flows in the separation space provided that the membrane is mechanically resistant to the flow.

In one embodiment, the plates are, individually, in glass, in quartz, in ceramic or in thermoplastic. In one embodiment, plates are planar plates. In one embodiment, at least one plate, preferably both plates, are free of any graving or carving. In one embodiment, the plates may be, individually, treated chemically and/or physically. Glass has the advantage of being highly stable electrically and chemically. Moreover, glass is highly tolerant to biomolecules, e.g. proteins and has good microfluidic properties. Glass is cheap and widespread, easy to be purchased. In one embodiment, the plates have each a thickness ranging from 0.5 to 5 mm, preferably 0.8 to 2 mm, more preferably about 1 mm. In this specification, theses plates may be referred to as protective plates, as they protect the integrity of the fluidic circuit.

According to the invention, at least part of the sheet is hollowed out and the hollow corresponds to the fluidic circuit, comprising at least two inlets, a separation chamber, and at least one outlet.

In one embodiment, the pressure within the chamber ranges from atmospheric pressure to 1000 bars. In one embodiment, a pressure ranging from more than atmospheric pressure from more than atmospheric pressure to 1000 bars, is applied at the exit of the separation chamber with at least one flow restrictor or more. Preferably, the pressure is up to 500 bars, more preferably up to 50 bars.

In one embodiment, the separation chamber is elongated. It may have a rectangular general form, defining two lateral walls.

The injection point of the sample will depend upon the design of the sheet, which so is used not only as walls but also as a fluidic circuit. The injection point can be centered or off-centered (symmetric or asymmetric design, respectively). The possibility to hollow out quickly many different designs from the sheet is an important advantage of this invention.

In one embodiment, with consideration to the conductivity gradients at the interface between a high-conductivity and a low-conductivity phase that is perpendicular to the applied electric field, it is preferred that entities of interest included in the sample shall not be in direct contact with the high conductive solution. The size of the flowing electrodes, depending on the set-up of fluidics, are larger or smaller thus confining more or less the actual available separation space.

In one embodiment, the chip of the invention does not comprise any optical detection portion. In another embodiment, the chip of the invention comprises a detection system to analyze the separation in a continuous way.

In another aspect, this invention relates to a network of at least two micro-free flow electrophoresis chips according to the invention, wherein a single sample is simultaneously provided to at least two micro-free flow electrophoresis chips of the invention.

### DEFINITIONS

In the present invention, the following terms have the following meanings:
- **"plate"**: flat substrate of finished dimensions. In one embodiment, the plate used in the invention is planar.
- **"polymer"**: macromolecule composed of repeated subunits. In this invention, the polymer may be natural or synthetic. In one embodiment, the polymer may be a polyimide. Examples of polyimides useful in this invention include, but are not limited to, Apical®, Kapton®, UPILEX®, VTEC PI®, Norton TH®, Chemfilms® (Saint Gobain) and Kaptrex®.
- **"sheet"**: thin piece of polymer or inorganic material, preferably of micrometric height, which can also be referred to as a film; its form may be rectangular or any possible form fitting the form of the plates. In one embodiment, the sheet used in this invention is of micrometric height, i.e. 1 to 600 micrometers, preferably 10 to 350 micrometers, more preferably 50 to 200 micrometers.
- **"fluidic circuit"**: design hollowed out in a sheet, wherein fluids can circulate. The fluidic circuit may include chamber, channels, ports. In this invention, the fluidic circuit may be symmetric or asymmetric. By "hollowed out", it is meant partially or totally graved or cut or holed.
- **"membrane"**: separation means used in a fluidic circuit.
- **"port"**: inlet or outlet of the fluidic circuit.
- **"stack"**: a plate and a sheet.
- **"pile"**: a series of elements composing the microchip of the invention.
- **"flow restrictor"**: any means or device able to adjust a pressure.
- **"separation zone"**: a zone between the inlets and outlet(s) of the fluidic circuit, in which separation occurs in at least one separation chamber.
- **"separation chamber"**: a part of the separation zone having a first side and a second side along which a first electrode and a second electrode, respectively, are intended to flow.

### DETAILED DESCRIPTION

The following detailed description will be better understood when read in conjunction with the drawings. For the purpose of illustrating, the microchip is shown in the preferred embodiments. It should be understood, however that the application is not limited to the precise arrangements, structures, features, embodiments, and aspects shown. The drawings are not drawn to scale and are not intended to limit the scope of the claims to the embodiments depicted. Accordingly, it should be understood that where features mentioned in the appended claims are followed by reference signs, such signs are included solely for the purpose of enhancing the intelligibility of the claims and are in no way limiting on the scope of the claims.

### BRIEF DESCRIPTION OF THE DRAWINGS

**FIG. 1** is an exploded view of an embodiment of the micro-free flow electrophoresis chip of the invention comprising two plates and a sheet showing a fluidic circuit.
**FIG. 2** is an exploded view of an embodiment of the micro-free flow electrophoresis chip of the invention comprising three plates and two sheets showing a fluidic circuit.
**FIG. 3A** is an exploded view of an embodiment of the micro-free flow electrophoresis chip of the invention comprising two clamping plates, a gasket, two glass plates, and a sheet with the fluidic circuit.
**FIG. 3B** is a section view of the embodiment shown in Fig 3A.
**FIG. 4A** is a view of the embodiment shown in Fig 3A when the chip is clamped between the two clamping plates and screws as clamping means.
**FIG. 4B** is a section view of the embodiment shown in Fig 4A.
**FIG. 5A** is a view of the embodiment shown in Fig 4A, wherein the upper clamping plate is displayed slightly transparent to see inside.
**FIG. 5B** is a top view of the embodiment shown in Fig 5A.
**FIG. 6** is a top view of a sheet hollowed out to define a fluidic circuit for a micro-FFE chip according to the invention, where the separation zone is configured to comprise multiple adjacent separation chambers, the sheet being shown in a flowing configuration with no carrier.
**FIG. 7** is a view of a sheet identical to that of **FIG. 6****,** the sheet being shown in a flowing configuration with a carrier.

### REFERENCES

**1** - Pile,
**2 -** Plate (in one embodiment, this plate is a glass plate),
**2A** - Upper plate (in one embodiment, the upper plate is a glass plate),
**2B** - Bottom plate (in one embodiment, the bottom plate is a glass plate),
**3 -** Polymer sheet hollowed out and defining a fluidic circuit **10,**
**30** - Separation zone,
**31** - Separation chamber,
**31A** - First side of the separation chamber **31,**
**31B** - Second side of the separation chamber **31,**
**10** - Fluidic circuit (also called circuit design),
**11 -** Inlet, also referred to as inner port,
**12** - Outlet, also referred to as outer port,
**13** - Clamping plate,
**14** - Rubber sheet (in one embodiment, the rubber is made of silicone),
**15** - Screw,
**16** - Holes for connecting tubings,
**21 -** First fluid electrode,
**22** - Second fluid electrode,
**23** - Sample,
**24** - Carrier.

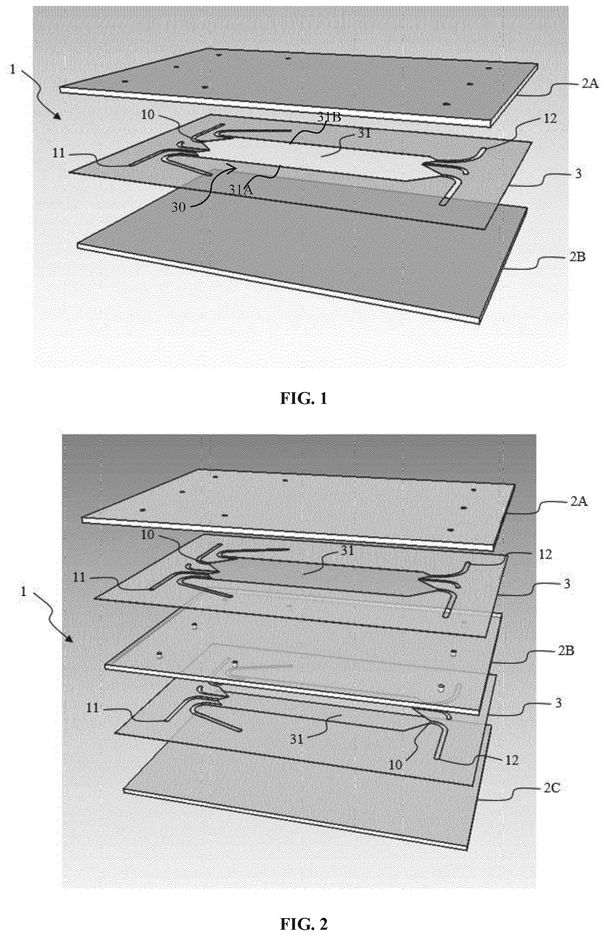

**FIG. 1** shows a micro-Free-Flow-Electrophoresis chip which is made with two plates, an upper plate **2A** and a bottom plate **2B,** both made of glass. The plates squeeze a sheet **3** (laser cut 50 µm height sheet), so that the sheet **3** is uniformly disposed between upper and bottom plates (**2A, 2B**). In one embodiment, the sheet **3** is made of Kapton®, a polyimide film developed by DuPont. The sheet **3** is bonded to the glass plates **2A, 2B** by epoxy glue.

The sheet **3** is uniformly disposed between the upper plate **2A** and the bottom plate **2B,** a part of said sheet **3** being hollowed out for designing a fluidic circuit **10.** The fluidic circuit **10** comprises inlets **11,** outlets **12,** and a separation zone **30** comprising a separation chamber **31** confined by the plates **2A, 2B.**

The sheet **3** forms the walls **31A, 31B** of the separation chamber **31.** The height of the sheet determines the height of the separation chamber **31.** The upper glass slide **2A** is drilled with a driller (Dremel) to insert connection tubings (not represented). The fluidic circuit **10** shows five inlets **11** (inner ports) and three outlets **12** (outer ports) and a separation chamber **31.**

A first and a second fluid electrodes, made of highly conductive solutions (up to 0.5M KCl, about 30 mS/cm) are introduced and flown in the separation chamber **31,** each along one of the walls **31A, 31B.**

The flowing electrodes are pumped with positive or negative pressure from remote containers, relative to the separation chamber, filled with the highly conductive solutions. Flow-scheme can be such as the highly conductive solutions can be recycled.

Solid electrodes are in direct contact with the highly conductive solutions.

Solid electrodes are connected to a power supply so that a voltage can be applied and generate an electric field in the separation chamber. One electrode is a cathode and one electrode is an anode. In one embodiment, solid electrodes are external platinum rod-shaped electrodes each embedded within a glass bottle (Schott) filled with the highly conductive solution; one end of the platinum electrode is in direct contact with the solution whether the other end is connected to a power supply. A standard blue cap from a Schott bottle is specifically adapted to fit with the electrode and the tubings. Three holes have been drilled in each cap: one for introducing the electrode, one to adapt the tubing (PTFE) connecting the bottle to the microchip and one connecting the bottle to the pressure controller. The latter applies a pressure onto the liquids in the closed pressured container so that fluids are pumped into the tubing connected to the microchip and ultimately into the separation chamber.

Adjacent to and in contact with the flowing electrodes, a carrier solution may be injected.

Containers are connected to the microchip by tubings of any type, e.g. PEEK or PTFE, or any other means suitable to deal with liquid flows. Carrier solution is pumped with positive pressure into the separation chamber **31.**

Eluents can be sorted to waste or collected in various eluent containers according to the end user needs.

All the liquids are pumped into the microchip with a pressure controller (Fluigent, MFCS) equipped with 350 mbars and 1000 mbars pressure regulators. Flows at inlets are measured by flow-meters (Fluigent) connected to FRCM monitoring unit (Fluigent).

In one embodiment, downstream to the flowing electrodes outlets **12** are flow restrictors. They are used to adjust and tune counter pressures at the outlets and so the fluidics within the separation chamber **31.**

**FIG. 2** shows another embodiment of the invention. In order to increase the productivity, a so-called DUAL chip was built. In this dual version, two separation chambers work in parallel with only one system pumping fluids, one set of electrodes, etc. This dual microchip shows the possibility of numbering-up the device and hence increase the volume of sample treated.

In this embodiment, the microchip is built as follows from top layer to bottom layer:
- a first (upper) glass plate **2A,**
- a first laser cut hollowed out sheet **3** with the circuit design **10,**
- a second (intermediary) glass plate **2B,**
- a second laser cut hollowed out sheet **3** with the circuit design **10,**
- a third (bottom) glass plate **2C.**

Downstream to the flowing electrodes outlets may be placed flow restrictors. They are used to adjust and tune counter pressures at the outlets and so the fluidics within the chamber.

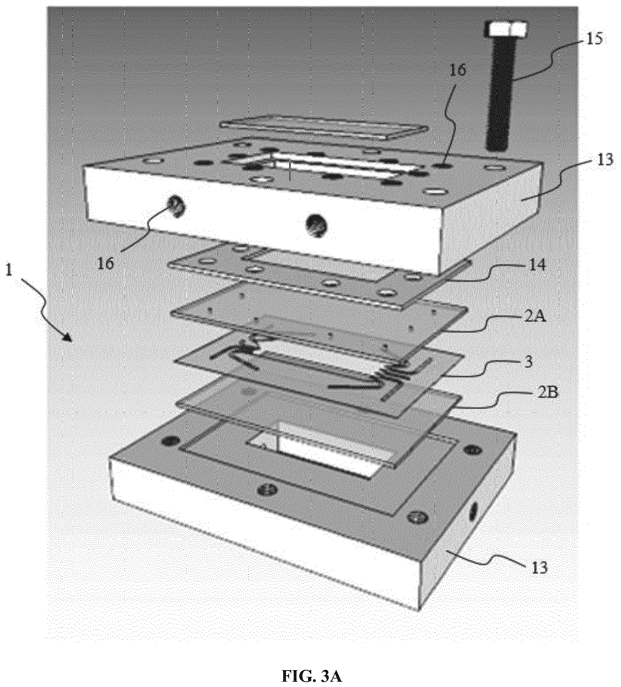

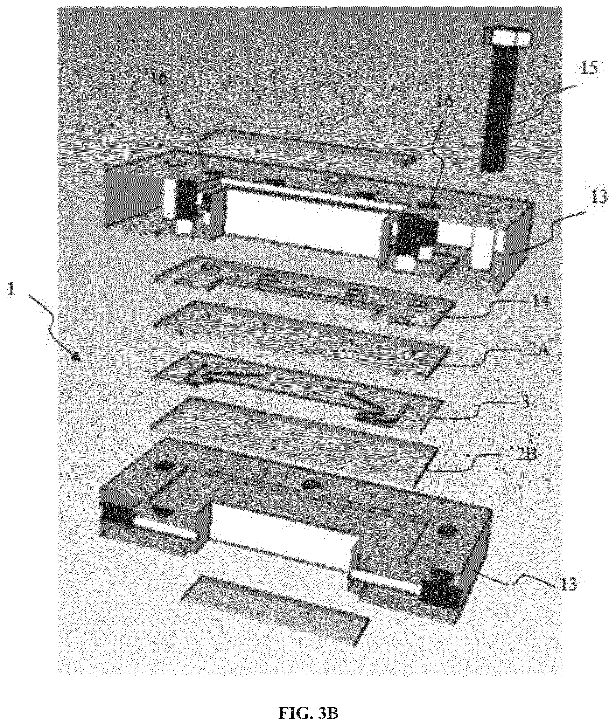

**FIG. 3A** and **FIG. 3B** show a further embodiment of the invention including cooling means. In this embodiment, the micro-Free-Flow-Electrophoresis chip of the invention is built as follows from top layer to bottom layer:
- an upper clamping plate **13,** made for example of aluminum and having a first cooling chamber inside and a window configured to watch the fluidic circuit **10,** or to watch at least the separation chamber **31,**
- a gasket **14,** ensuring that the cooling chamber of the upper clamping plate **13** and the separation chamber are watertight. The gasket **14** has been hollowed out so as to accommodate the tubing's connecting flexible pipes to the fluidic circuit **10** of the separation chamber **31,**
- a first glass plate **2A,** which has been hollowed out by drilling. This first glass plate **2A** forms the top of the separation chamber **31,**
- a laser cut hollowed out sheet **3** with the circuit design **10,** the sheet 3 being for example a polyimide sheet,
- a second glass plate **2B,** which forms the bottom of the separation chamber **31,**
- a bottom clamping plate **13,** for example made of aluminum, having a second cooling chamber inside and a window configured to see the fluidic circuit **10,** or at least the separation chamber **31,** and, optionally, a second gasket ensuring that the second cooling chamber is watertight. When the chip includes two cooling chambers, which are preferably equivalent, heat dissipation is the same at each side of the separation chamber.

Holes **16** were drilled in the clamping plates, the gasket and the glass plate **2A** for connecting tubings. The number of holes corresponds to the sum of inlet and outlet ports. Supplementary holes **16** were drilled in the clamping plates for circulating a cooling fluid.

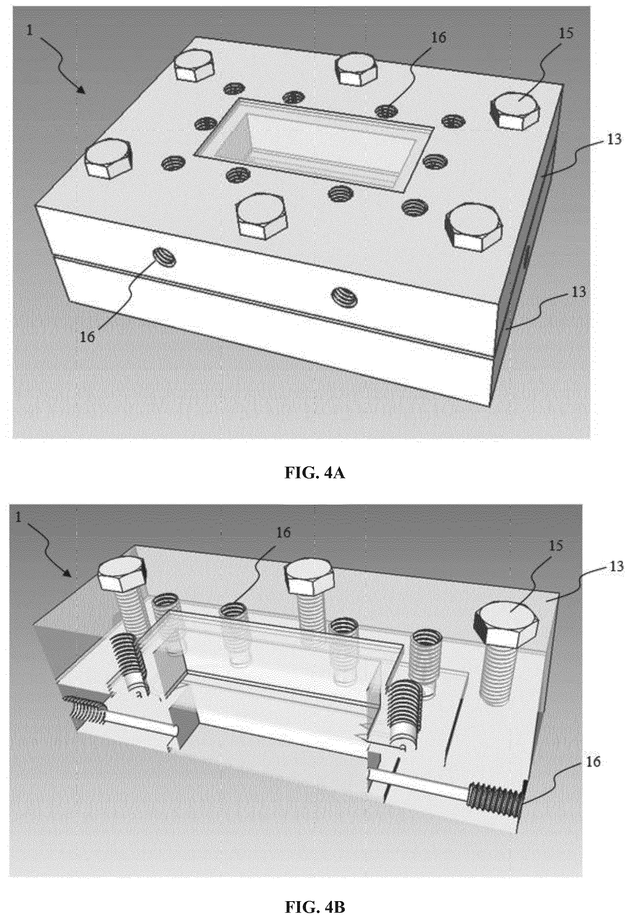

As seen on **FIG. 4A** and **4B****,** clamping is ensured by screws **15** connecting the upper and the bottom aluminum plates **13,** thus providing tightness. The gasket (not represented) served as joint and provided an evenly dispatched pressure onto the glass plates (not represented) following pressures applied by screwing the two plates **13.** Interfacing is made with M6 and 1/16" connections. The overall sandwich proved to be free of visible leakage. The microchip is easy to be disassembled and reassembled whenever necessary.

In one embodiment, a modified syringe pump with several syringes was connected downstream the chip. It commanded the fluidics at the outlets and manages in a tidy manner the flows at the outlets. This was simply done by matching the in and out flux from the chamber. The syringe pump was the driver of a steady flow because it forced flows to evenly exit provided each outlet channel is connected to one syringe. Of course, all syringes have the same setting at a time. In other words, it smoothed small differences in fluidic resistance at the outlets. Eventually syringe pump gave a satisfactory result and allows the collection of fractions directly into syringes.

In one embodiment, the microchip is as described before, except that upper and bottom clamping plates **13** may be holed laterally. Each plate **13** may have two holes drilled to fit connectors (PEEK, GE Healthcare) where flexible pipes are connected. The second difference is that connectors may be made of plastic with ferrules and rings to tighten the PEEK tubings to the upper glass plate **2A** of the separation chamber **31.** A third difference is that on each plate a small glass plate may be stuck onto the open window necessary to visualize the streams in the chamber. Once assembled there are three closed chambers, from top to bottom: a first chamber with two pipes connected, a second chamber which is the separation chamber and a third chamber with two pipes. The pipes are used to let a coolant circulate, e.g. water. The pipes are connected to a controlled circulating bath filled with the coolant.

This microchip enables very long run at higher voltage, for instance 1000 V with a good command of Joule effect thus limiting heating. Thermal energy due to the current is greatly limited to ensure stable separation over time. This is also particularly suitable for the separation of proteins, which are usually prone to irreversible denaturation at temperatures higher than physiological ones. The microchip enables to maintain temperature below 25°C. Separation of two forms of a same GFP was successfully performed with this microchip. GFPmut2A206KSTSHis6 shows a main degradation product due to the loss of some amino acids at the C-terminus. The run demonstrated there is a high separation of the degraded GFP from its non-degraded form.

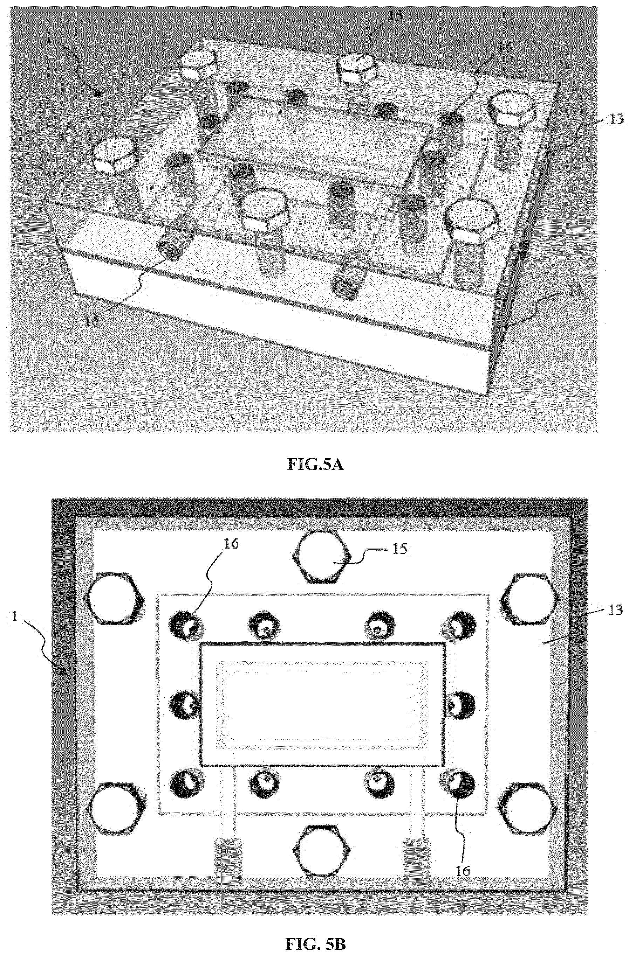

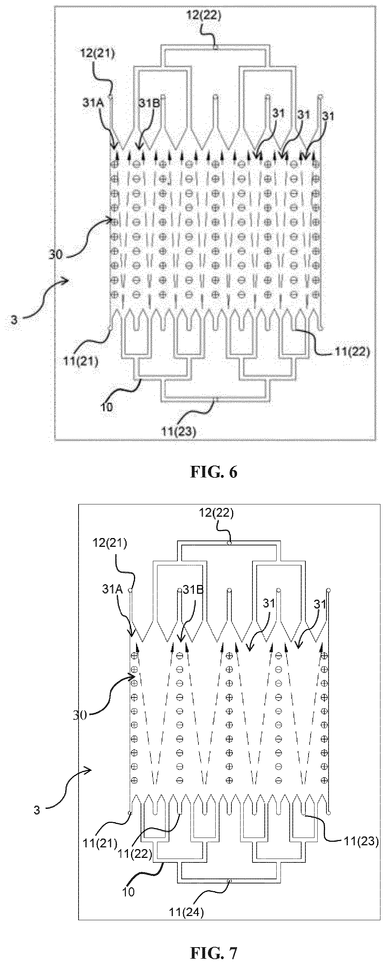

**FIG. 6** shows another embodiment of a sheet **3,** made for example of polyimide, which may be used in a micro-FFE chip similar to the one represented in **FIG. 3A** to **FIG. 5B****,** in replacement for the sheet **3** shown in these figures. In this embodiment, the separation zone **30** of the sheet **3** comprises multiple adjacent separation chambers **31,** more specifically eight adjacent separation chambers **31** in the represented example.

The sheet **3** is hollowed out for designing a fluidic circuit **10** comprising inlets **11,** outlets **12,** and the separation zone **30** with the eight separation chambers **31** to be confined by the plates **2A, 2B.** In this embodiment, for each pair of adjacent separation chambers **31,** there is therebetween a shared fluid electrode (cathode or anode) delimiting the two adjacent separation chambers. The electrodes may be switched, thus making it possible to change the elution outlet.

In the embodiment of the sheet **3** shown in **FIG. 6****,** the external fluid electrodes flow along respective outer walls of the separation zone **30** of the sheet, whereas the shared internal fluid electrodes do not flow along any wall. In this case, at least one side **31A, 31B** of each separation chamber **31** is defined by a shared internal electrode.

In **FIG. 6****,** the sheet **3** is shown in a flowing configuration with no carrier. The fluidic circuit **10** comprises an anode inlet **11(21)** for the introduction of the fluid anode **21** in each separation chamber **31,** a cathode inlet **11(22)** for the introduction of the fluid cathode **22** in each separation chamber **31,** and a sample inlet **11(23)** for the introduction of the sample **23** in each separation chamber **31.** It is understood that the sheet **3** is hollowed out at different depths to create inlet channels **11(21), 11(22)** and **11(23)** that are superposed without any junction.

The portion of the sample that has migrated toward the anode **21** flows with the anode through an anode outlet **12(21),** whereas the portion of the sample that has migrated toward the cathode **22** flows with the cathode through a cathode outlet **12(22).** Here again, it is understood that the sheet **3** is hollowed out at different depths to create outlet channels **12(21), 12(22)** that are superposed without any junction.

According to one embodiment (not shown), it is possible to have one and the same outlet **12,** when it is desired to analyze the sample, without any separation.

**FIG. 7** is a view of a sheet identical to that of **FIG. 6****,** where the sheet **3** is shown in a flowing configuration with a carrier **24.** In this case, the fluidic circuit **10** comprises an anode inlet **11(21)** for the introduction of the fluid anode **21** in each separation chamber **31,** a cathode inlet **11(22)** for the introduction of the fluid cathode **22** in each separation chamber **31,** a sample inlet **11(23)** for the introduction of the sample **23** in each separation chamber **31,** and a carrier inlet **11(24)** for the introduction of the carrier **24** on each side of each separation chamber **31.** It is understood that the sheet **3** is hollowed out at different depths to create inlet channels **11(21), 11(22), 11(23), 11(24)** that may be superposed without any junction.

Such a carrier **24** may advantageously be used to increase the degree of purity of a compound of interest. The carrier **24** prevents the molecules of the sample from diffusing into the fluid electrodes. As illustrated in **FIG. 7****,** such a carrier **24** may be injected from a separate inlet which is independent from the inlets for the sample and the fluid electrodes. As a variant, the carrier **24** may be injected together with the sample or the fluid electrodes.

Advantageously, in the above embodiments, all fluids including the fluid electrodes **21, 22,** the sample **23,** and optionally the carrier **24,** have laminar flow regime. It has been found experimentally that there is no turbulence when the flow is laminar because the flow is in a self-regulation configuration. Then, no physical separation is necessary between adjacent separation chambers **31.**

According to a variant (not shown), the sheet **3** may be hollowed out so as to obtain multiple parallel separation chambers **31** separated by separation walls of the sheet. In this case, each separation chambers **31** may be delimited by two opposite walls defined by the height of the sheet **3** and the fluid electrodes may flow along respective walls.

### EXAMPLES

### Example 1

In a first embodiment, a sample of fluorescein sodium salt (Sigma, ref 46860-25G-F) is injected, at 5 µL/min, through the inlet **11** while carrier solutions are flown in, alongside the highly conductive solutions, at 100 µL/min, to sheath and focus the sample stream. The stream remained stable for more than an hour even when the injection flow was varied down to 0.5 µL/min or up to 25 µL/min.

In this embodiment, low conductive carrier was HEPES 10 mM, pH 7.5, HPMC 0.2% (w/v), Tween 20 0.1% (w/v).

In one embodiment, the highly conductive buffer solution was HEPES 10 mM, pH 7.5, HPMC 0.2% (w/v), Tween 20 0.1% (w/v), Methanol 40% (v/v), 0.5 M KCl and Fluorescein sodium salt used as visual marker for monitoring the flowing electrodes fluidics.

In another embodiment, the highly conductive solution used as flowing electrode is prepared with HEPES 5 mM, pH 7.5, HPMC 0.2% (w/v), Tween 20 0.1% (w/v), Methanol 40% (v/v), 0.5 M KCl, with conductivity ∼30 mS/cm. Rhodamine B is added to that buffer. Indeed, Rhodamine B, which is neutral at such pH and shall not migrate under voltage, serves for flowing electrodes fluidic stability monitoring over time.

### Example 2

In a second embodiment, the sample is a mixture made with Rhodamine B, Rhodamine 6G and Fluorescein. It was processed into the separation chamber **31** under a 1.5 kV voltage: at pH 7.5, the said chemicals are respectively neutral, monocationic and dianionic. The sample is injected at 15 µL/min, focused by low conductive solution, i.e. carrier 5, at both sides injected evenly at 250 µL/min with residence time < 5 seconds. The molecules deflected according to expectations and a base-line resolution (Rs > 1.5) is achieved. Fluidics were stable, no bubbles were matched and the deflection and separation angle between the streams remained constant during the experiment, which lasted for about 5 minutes.

The low conductive and the highly conductive solutions are as described in Example 1.

### Example 3

In a third embodiment, the sample was a mix of fluorescein coupled to lysine at different molar ratios. The mix was processed into a chip comprising two stacked chambers (n = 1) under a 500 V voltage: at pH 7.5, the said chemicals are neutral or negatively charged. The sample is injected at 11 µL/min, focused by low conductive solution at both sides injected at 175 µL/min. The molecules deflected according to expectations and a base-line resolution (Rs > 1.5) is achieved for at least 3 different components. The streams were stable. At the start and for a few dozen seconds there was a gap between the patterns in the two chambers. Over time electric fields in each chamber stabilize and there was no more any gap at visual inspection. The separation was carried for 30 minutes with steady deflections and no bubbles sighted.

The low conductive and the highly conductive solutions are as described in Example 1.

### Example 4

In a fourth embodiment, to check separation stability in time, the mixture with small chemicals was injected under a 1.5 kV voltage. The highly conductive solution is as previously but with KCl 0.2 M instead of 0.5 M. Low conductive solution are identical to the one used in Example 1. Sample (same as in Example 2) is injected at 10 µL/min, and low conductive solution sheathing the sample at 280 µL/min measured through flowmeters. Residence time was less than 5 seconds. The 3 molecules of the mixture did separate well with a very stable fluidic over the course of the run. The experiment lasted for more than two hours with an excellent stability with no bubbles sighted.

### Example 5

In a fifth embodiment, the sample is a mixture of Rhodamine 6G and Fluorescein. It was processed into the chamber under a 1.0 kV voltage: at pH 3.6, the said chemicals are respectively monocationic and neutral. The sample is injected at 1.5 µL/min, focused by low conductive solution at both sides injected at 20 and 25 µL/min. The molecules deflected according to expectations and a base-line resolution (Rs > 1.5) is achieved. Low conductive buffer was citrate 10 mM, pH 3.6, HPMC 0.2% (w/v), Tween 20 0.1% (w/v), Ethanol 70% (v/v). High conductive buffer solution was citrate 10 mM, pH 3.6, HPMC 0.2% (w/v), Tween 20 0.1% (w/v), Methanol 40% (v/v), 0.5 M KCl and Rhodamine 110 used as visual marker for monitoring the flowing electrodes fluidics.

### Example 6

In a sixth embodiment, the sample is a mixture containing B-Phycoerythrin and a GFPmut2 with a 6 Histidine tag called GFPmut2His6. The mixture was processed into the chamber under a 750 V voltage. The sample is injected at 3 µL/min, focused by low conductive solution at both sides injected at 50-55 µL/min with residence time close to 20 seconds. Both the proteins are acidic with expected pI values of ≈4.5 and ≈5.5 respectively for B-Phycoerythrin and GFPmut2His6. Both proteins are expected to go to the anode. The molecules deflected according to expectations and a base-line resolution (Rs > 1.5) is achieved. It is to be noted the upper stream is related to B-Phycoerythrin, whether GFP which is less acidic is also less deflected. A third stream is visible in between the two main streams: it is possibly a minor form of B-Phycoerythrin. This result is consistent with deflection patterns observed when these proteins are migrated separately. Low conductive buffer was MES 10 mM, pH 6, HPMC 0.2% (w/v), Tween 20 0.1% (w/v). High conductive buffer solution was same with Methanol 40% (v/v), 0.5 M KCl and Fluorescein sodium salt used as visual marker for monitoring the flowing electrodes fluidics.

### Example 7

In a seventh embodiment, an interesting achieved separation was carried out with two GFPs that cannot be separated otherwise to a baseline separation on a reference chromatography column (Q Sepharose Fast Flow, data not shown). Furthermore, the two GFPs, operated at a pH close to their pI (pH 5), tend to stick to the said reference column and can only be eluted with a highly concentrated sodium hydroxyde solution. Low conductive buffer was Acetate 10 mM, pH 5, HPMC 0.2% (w/v), Tween 20 0.1% (w/v). High conductive buffer solution was Acetate 10 mM, pH 5, HPMC 0.2% (w/v), Tween 20 0.1% (w/v), Methanol 40% (v/v), 0.5 M KCl and Fluorescein sodium salt used as visual marker for monitoring the flowing electrodes fluidics. A binary mixture made of GFPmut2 and GFPmut2His6 was processed into the chamber under a 1000V voltage: at pH 5, the GFPs are close to their pI and are neutral or slightly positively charged. The theoretical pI difference between the two GFPs is 0.37. The sample is injected at 3.5 µL/min, focused by low conductive solution at both sides injected at 93 µL/min. The molecules deflected according to expectations and a separation is achieved.

### Example 8

In an eighth embodiment, the sample is a mixture of Rhodamine 6G, Rhodamine 110 and Fluorescein, all at 0.33mM concentration. There is no low conductive buffer as carrier, only highly conductive flowing electrodes and sample. The latter was formulated into Hepes 10 mM, pH7.5, HPMC 0.2% (w/v), Tween 20 0.1% (w/v), Ethanol 50% (v/v). It was injected at 37 µL/min through two inlets, focused by high conductive solution from the flowing electrodes at both sides adjacent to wall chambers and at the middle of the separation chamber. Flowing electrodes are high conductive buffer solution that was Hepes 10 mM, pH 7.5, HPMC 0.2% (w/v), Tween 20 0.1% (w/v), Methanol 40% (v/v), 0.5 M KCl.

The sample is used as visual marker for monitoring the fluidics when the voltage is off, since the flowing electrodes have no added visual marker.

The sample is sheathed by flowing electrodes and there is a double sample injection thus setting two adjacent separation chambers within one unique physical separation zone, as described above. The sample was processed into the device up to a 1.0 kV voltage.

At pH 7.5, said chemicals are respectively monocationic, neutral and dianionic. The molecules deflected according to expectations and a base-line resolution (Rs > 1.5) is completed between Rhodamine 6G and Fluorescein. Providing Rhodamine 110 is nearly neutral there was no deflection.

Both Rhodamine 6G (Rh6G) and Fluorescein (FL) got separated in the two separation chambers.

## Claims

1. Micro-Free Flow Electrophoresis chip for analyzing or separating a sample including a pile (1) comprising:
- at least a first plate and a second plate (2),
- **characterized in that** the chip further comprises
- a sheet (3) uniformly disposed between the first and second plates (2), a part of said sheet (3) being hollowed out for designing a fluidic circuit (10), wherein the fluidic circuit is partially or totally graved or cut or holed out of the sheet, said fluidic circuit (10) comprising at least three inlets (11), at least one outlet (12), and a separation zone (30) comprising at least one separation chamber (31) having walls defined by the height of the sheet and being confined by the plates (2),
- clamping means,
- in-between the sheet (3) and the second plate (2), n stacks composed of a plate (2) and a sheet (3), n being zero or a positive integer,
each sheet (3) comprising at least three inlets:
- one inlet arranged for entry of a first fluid electrode,
- one inlet arranged for entry of a second fluid electrode and
- one inlet arranged for entry of a sample,
and at least one outlet for exit of:
- a first fluid electrode intended to flow, in each separation chamber (31), along a first side (31A) of the separation chamber,
- a second fluid electrode intended to flow, in each separation chamber (31), along a second side (31B) of the separation chamber opposite to the first side (31A),
- a sample intended to flow, in each separation chamber (31), between the first and second fluid electrodes,
said first and second fluid electrodes in each separation chamber (31) being configured to be in contact with means for generating an electric field to apply an electric field to the separation chamber.

2. Micro-Free Flow Electrophoresis chip according to claim 1, wherein, for at least one sheet (3), the separation zone comprises at least two adjacent separation chambers (31), wherein the fluidic circuit (10) is configured in such a way that the two adjacent separation chambers (31) are delimited by at least one of the first and second fluid electrodes during their flowing in the fluidic circuit.

3. Micro-Free Flow Electrophoresis chip according to claim 1 or claim 2, wherein means for generating the electric field within the fluid electrodes is located upstream and/or downstream the pile.

4. Micro-Free Flow Electrophoresis chip according to any one of claims 1 to 3, further comprising a carrier intended to flow between the fluid electrodes and the sample in each separation chamber (31).

5. Micro-Free Flow Electrophoresis chip according to any one of claims 1 to 4, wherein clamping means comprise glue, screws, and/or springs.

6. Micro-Free Flow Electrophoresis chip according to any one of claims 1 to 5 wherein clamping means comprise two clamping plates (13).

7. Micro-Free Flow Electrophoresis chip according to claim 6, wherein said clamping plates (13) are made of metal; or polymer, especially resin; or a suitable insulating material.

8. Micro-Free Flow Electrophoresis chip according to any one of claims 1 to 7, further comprising connectors and tubings for bringing in and out the fluidic circuit, the fluid electrodes, the sample, and optionally the carrier.

9. Micro-Free Flow Electrophoresis chip according to any one of claims 1 to 8, further comprising means for cooling the chip, especially means for circulating a coolant fluid in, over, under or at the sidewall of a plate (2), a sheet (3) or a stack (1), wherein the means may be a cooling plate integrated in the stack (1) and/or may be cooling means integrated within at least one clamping plate (13).

10. Micro-Free Flow Electrophoresis chip according to any one of claims 1 to 9, wherein n is 0 or ranges from 1 to 1000, preferably 2 to 100.

11. Micro-Free Flow Electrophoresis chip according to any one of claims 1 to 10, wherein the fluidic circuit (10) is free of any membranes.

12. Micro-Free Flow Electrophoresis chip according to any one of claims 1 to 11, wherein the sheet (3) has a micrometric height, preferably ranging from 1 to 600 micrometers, more preferably 10 to 350 micrometers.

13. Micro-Free Flow Electrophoresis chip according to any one of claims 1 to 12, wherein the sheet (3) is made of polymer(s), preferably polyimide, polyethylene, polyethylene terephtalate, polyamide, epoxy or polycarbonate; or in inorganic materials, preferably glass or ceramic, such as alumina.

14. Micro-Free Flow Electrophoresis chip according to any one of claims 1 to 13, wherein the exit of each separation chamber (31) is configured to receive a pressure ranging from more than atmospheric pressure to 1000 bars.

15. Network of at least two Micro-Free Flow Electrophoresis chips according to any one of claims 1 to 14, wherein a single sample is simultaneously provided to at least two micro-free flow electrophoresis chips.

## Patentansprüche

1. Mikro-Free-Flow-Elektrophorese-Chip zum Analysieren oder Trennen einer Probe, der einen Stapel (1) einschließt, umfassend:
- wenigstens eine erste Platte und eine zweite Platte (2),
- **dadurch gekennzeichnet, dass** der Chip ferner umfasst
- ein Blatt (3), das gleichmäßig zwischen der ersten und der zweiten Platte (2) angeordnet ist, wobei ein Teil des Blattes (3) zur Gestaltung eines Fluidkreislaufs (10) ausgehöhlt ist, **dadurch gekennzeichnet, dass** der Fluidkreislauf teilweise oder vollständig in das Blatt eingegraben oder geschnitten oder eingelocht ist, wobei der Fluidkreislauf (10) wenigstens drei Einlässe (11), wenigstens einen Auslass (12) und eine Trennzone (30) umfasst, die wenigstens eine Trennkammer (31) mit Wänden umfasst, die durch die Höhe des Blattes definiert und durch die Platten (2) begrenzt sind,
- Spannmittel,
- zwischen dem Blatt (3) und der zweiten Platte (2) n Stapel, die aus einer Platte (2) und einem Blatt (3) bestehen, wobei n Null oder eine positive ganze Zahl ist und jedes Blatt (3) wenigstens drei Einlässe umfasst:
- einen Einlass, der für den Eintritt einer ersten Flüssigkeitselektrode angeordnet ist,
- einen Einlass, der für den Eintritt einer zweiten Flüssigkeitselektrode angeordnet ist, und
- einen Einlass, der für den Eintritt einer Probe angeordnet ist,
und wenigstens einen Auslass für den Ausgang von:
- einer ersten Flüssigkeitselektrode, die in jeder Trennkammer (31) entlang einer ersten Seite (31A) der Trennkammer fließen soll,
- einer zweiten Flüssigkeitselektrode, die in jeder Trennkammer (31) entlang einer zweiten Seite (31B) der Trennkammer gegenüber der ersten Seite (31 A) fließen soll,
- einer Probe, die in jeder Trennkammer (31) zwischen der ersten und der zweiten Flüssigkeitselektrode fließen soll,
wobei die ersten und zweiten Flüssigkeitselektroden in jeder Trennkammer (31) dazu ausgelegt sind, in Kontakt mit Mitteln zur Erzeugung eines elektrischen Feldes stehen, um ein elektrisches Feld an die Trennkammer anzulegen.

2. Mikro-Free-Flow-Elektrophorese-Chip nach Anspruch 1, wobei für wenigstens ein Blatt (3) die Trennzone wenigstens zwei benachbarte Trennkammern (31) umfasst, wobei der Fluidkreislauf (10) so ausgelegt ist, dass die beiden benachbarten Trennkammern (31) durch wenigstens eine der ersten und zweiten Flüssigkeitselektroden begrenzt sind, während sie im Fluidkreislauf fließen.

3. Mikro-Free-Flow-Elektrophorese-Chip nach Anspruch 1 oder Anspruch 2, wobei Mittel zur Erzeugung des elektrischen Feldes innerhalb der Flüssigkeitselektroden stromaufwärts und/oder stromabwärts des Stapels angeordnet sind.

4. Mikro-Free-Flow-Elektrophorese-Chip nach einem der Ansprüche 1 bis 3, der ferner einen Träger umfasst, der zwischen den Flüssigkeitselektroden und der Probe in jeder Trennkammer (31) fließen soll.

5. Mikro-Free-Flow-Elektrophorese-Chip nach einem der Ansprüche 1 bis 4, wobei die Spannmittel Kleber, Schrauben und/oder Federn umfassen.

6. Mikro-Free-Flow-Elektrophorese-Chip nach einem der Ansprüche 1 bis 5, wobei die Spannmittel zwei Spannplatten (13) umfassen.

7. Mikro-Free-Flow-Elektrophorese-Chip nach Anspruch 6, wobei die Spannplatten (13) aus Metall oder Polymer, insbesondere Harz, oder einem geeigneten Isoliermaterial hergestellt sind.

8. Mikro-Free-Flow-Elektrophorese-Chip nach einem der Ansprüche 1 bis 7, der außerdem Anschlüsse und Schläuche zum Einführen und Herausführen des Fluidkreislaufs, der Flüssigkeitselektroden, der Probe und gegebenenfalls des Trägers umfasst.

9. Mikro-Free-Flow-Elektrophorese-Chip nach einem der Ansprüche 1 bis 8, ferner umfassend Mittel zum Kühlen des Chips, insbesondere Mittel zum Zirkulieren eines Kühlfluids in, über, unter oder an der Seitenwand einer Platte (2), eines Blattes (3) oder eines Stapels (1), wobei die Mittel eine in den Stapel (1) integrierte Kühlplatte sein können und/oder in wenigstens einer Spannplatte (13) integrierte Kühlmittel sein können.

10. Mikro-Free-Flow-Elektrophorese-Chip nach einem der Ansprüche 1 bis 9, wobei n 0 ist oder im Bereich von 1 bis 1000, vorzugsweise 2 bis 100, liegt.

11. Mikro-Free-Flow-Elektrophorese-Chip nach einem der Ansprüche 1 bis 10, wobei der Fluidkreislauf (10) frei von jeglichen Membranen ist.

12. Mikro-Free-Flow-Elektrophorese-Chip nach einem der Ansprüche 1 bis 11, wobei das Blatt (3) eine mikrometrische Höhe aufweist, die vorzugsweise im Bereich von 1 bis 600 Mikrometer, insbesondere von 10 bis 350 Mikrometer liegt.

13. Mikro-Free-Flow-Elektrophorese-Chip nach einem der Ansprüche 1 bis 12, wobei das Blatt (3) aus Polymer(en), vorzugsweise Polyimid, Polyethylen, Polyethylenterephthalat, Polyamid, Epoxid oder Polycarbonat, oder aus anorganischen Materialien, vorzugsweise Glas oder Keramik, wie Aluminiumoxid, hergestellt ist.

14. Mikro-Free-Flow-Elektrophorese-Chip nach einem der Ansprüche 1 bis 13, wobei der Ausgang jeder Trennkammer (31) dazu ausgelegt ist, dass er einen Druck im Bereich von mehr als Atmosphärendruck bis 1000 bar aufnimmt.

15. Netzwerk aus wenigstens zwei Mikro-Free-Flow-Elektrophorese-Chips nach einem der Ansprüche 1 bis 14, wobei eine einzige Probe gleichzeitig wenigstens zwei Mikro-Free-Flow-Elektrophorese-Chips zugeführt wird.

## Revendications

1. Micropuce d'électrophorèse à flux libre pour analyser ou séparer un échantillon incluant une pile (1) comprenant:
- au moins une première plaque et une seconde plaque (2),
- **caractérisée en ce que** la puce comprend en outre
- une feuille (3) uniformément disposée entre les première et seconde plaques (2),
une partie de ladite feuille (3) étant évidée pour concevoir un circuit fluidique (10), où le circuit fluidique est partiellement ou totalement gravé ou découpé ou percé dans la feuille, ledit circuit fluidique (10) comprenant au moins trois entrées (11), au moins une sortie (12), et une zone de séparation (30) comprenant au moins une chambre de séparation (31) ayant des parois définies par la hauteur de la feuille et étant confinée par les plaques (2),
- des moyens de serrage,
- entre la feuille (3) et la seconde plaque (2), n empilements composés d'une plaque (2) et d'une feuille (3), n étant zéro ou un entier positif,
chaque feuille (3) comprenant au moins trois entrées:
- une entrée agencée pour l'entrée d'une première électrode fluide,
- une entrée agencée pour l'entrée d'une seconde électrode fluide et
- une entrée agencée pour l'entrée d'un échantillon,
et au moins une sortie pour la sortie de:
- une première électrode fluide destinée à s'écouler, dans chaque chambre de séparation (31), le long d'un premier côté (31A) de la chambre de séparation,
- une seconde électrode fluide destinée à s'écouler, dans chaque chambre de séparation (31), le long d'un second côté (31B) de la chambre de séparation opposé au premier côté (31A),
- un échantillon destiné à s'écouler, dans chaque chambre de
séparation (31), entre les première et seconde électrodes fluides, lesdites première et seconde électrodes fluides dans chaque chambre de séparation (31) étant configurées pour être en contact avec des moyens pour générer un champ électrique pour appliquer un champ électrique à la chambre de séparation.

2. Micropuce d'électrophorèse à flux libre selon la revendication 1, où, pour au moins une feuille (3), la zone de séparation comprend au moins deux chambres de séparation (31) adjacentes, où le circuit fluidique (10) est configuré de telle manière que les deux chambres de séparation (31) adjacentes sont délimitées par au moins l'une des première et seconde électrodes fluides pendant leur écoulement dans le circuit fluidique.

3. Micropuce d'électrophorèse à flux libre selon la revendication 1 ou la revendication 2, où les moyens pour générer le champ électrique dans les électrodes fluides sont situés en amont et/ou en aval de la pile.

4. Micropuce d'électrophorèse à flux libre selon l'une quelconque des revendications 1 à 3, comprenant en outre un support destiné à s'écouler entre les électrodes fluides et l'échantillon dans chaque chambre de séparation (31).

5. Micropuce d'électrophorèse à flux libre selon l'une quelconque des revendications 1 à 4, où les moyens de serrage comprennent de la colle, des vis et/ou des ressorts.

6. Micropuce d'électrophorèse à flux libre selon l'une quelconque des revendications 1 à 5 où les moyens de serrage comprennent deux plaques de serrage (13).

7. Micropuce d'électrophorèse à flux libre selon la revendication 6, où lesdites plaques de serrage (13) sont faites de métal; ou de polymère, en particulier de résine; ou d'un matériau isolant approprié.

8. Micropuce d'électrophorèse à flux libre selon l'une quelconque des revendications 1 à 7, comprenant en outre des connecteurs et des tubulures pour introduire dans et évacuer du circuit fluidique les électrodes fluides, l'échantillon et éventuellement le support.

9. Micropuce d'électrophorèse à flux libre selon l'une quelconque des revendications 1 à 8, comprenant en outre des moyens pour refroidir la puce, en particulier des moyens pour faire circuler un fluide réfrigérant dans, sur, sous ou au niveau de la paroi latérale d'une plaque (2), d'une feuille (3) ou d'un empilement (1), où les moyens peuvent être une plaque de refroidissement intégrée dans l'empilement (1) et/ou peuvent être des moyens de refroidissement intégrés à l'intérieur d'au moins une plaque de serrage (13).

10. Micropuce d'électrophorèse à flux libre selon l'une quelconque des revendications 1 à 9, où n est 0 ou va de 1 à 1000, de préférence 2 à 100.

11. Micropuce d'électrophorèse à flux libre selon l'une quelconque des revendications 1 à 10, où le circuit fluidique (10) est exempt de toute membrane.

12. Micropuce d'électrophorèse à flux libre selon l'une quelconque des revendications 1 à 11, où la feuille (3) a une hauteur micrométrique, de préférence allant de 1 à 600 micromètres, de préférence encore de 10 à 350 micromètres.

13. Micropuce d'électrophorèse à flux libre selon l'une quelconque des revendications 1 à 12, où la feuille (3) est faite de polymère(s), de préférence de polyimide, de polyéthylène, de polyéthylène téréphtalate, de polyamide, d'époxy ou de polycarbonate; ou de matériaux inorganiques, de préférence de verre ou de céramique, comme l'alumine.

14. Micropuce d'électrophorèse à flux libre selon l'une quelconque des revendications 1 à 13, où la sortie de chaque chambre de séparation (31) est configurée pour recevoir une pression allant de plus de la pression atmosphérique à 1000 bars.

15. Réseau d'au moins deux micropuces d'électrophorèse à flux libre selon l'une quelconque des revendications 1 à 14, où un seul échantillon est fourni simultanément à au moins deux micropuces d'électrophorèse à flux libre.
